# EUROPEAN PATENT SPECIFICATION

(11) **EP 2 244 353 B1**
(45) Date of publication and mention of the grant of the patent: **19.09.2012**
(21) Application number: 10003779.5
(22) Date of filing: 08.04.2010
(51) Int. Cl.: H02J 9/00

(54) **Energy saving device**
Stromsparvorrichtung
Dispositif d'économie d'énergie

(30) Priority: 08.04.2009 GB 0906088; 14.04.2009 GB 0906354; 14.04.2009 GB 0906355; 14.04.2009 GB 0906356; 02.10.2009 GB 0917318
(43) Date of publication of application: 27.10.2010
(73) Proprietor: Alfa Electric Ltd., Hastings East Sussex TN35 4NR (GB)
(72) Inventor: Harrison, Richard, Hastings East Sussex TN35 4NR (GB)
(74) Representative: Tothill, John Paul

(56) References cited:
- WO-A1-01/93400
- WO-A1-2007/017618
- US-A1- 2005 264 269
- US-A1- 2007 097 564

## Description

### Field of the Invention

The present invention relates to an apparatus and method for reducing the electrical energy consumed by a load such as a domestic or industrial electrical installation.

### Background

Municipal electricity supplies are designed to supply alternating current to domestic or industrial installations at a voltage within a prescribed range of values. The range of values supplied in different countries or regions varies depending on local laws and regulations.

Formerly the nominal voltage supplied within the UK was 240V. In most European countries the nominal voltage supplied was 220V.

Following voltage harmonization directives in 2003 all electricity supplied within the European Union must now be supplied within a voltage range of 230V ±10% (i.e. 207V to 253V).

In order to comply with the harmonized voltage range the UK adopted a voltage supply range of 230V +10% -6% (i.e. 216.2V to 253V), and most other European countries adopted a voltage supply range of 230V +6% -10% (i.e. 207V to 243.8V).

However, in most cases, the nominal voltages supplied in countries within the European Union have not changed. UK electricity suppliers continue to provide electricity at a nominal value of 240V, and European electricity suppliers continue to provide electricity at a nominal value of 220V.

Electrical equipment sold within a given country or region must be able to operate at every voltage within the voltage range prescribed for that country or region.

To accommodate for the voltage range within a country or region, manufacturers of electrical equipment typically design equipment that operates at a nominal voltage at or near the lower end of the prescribed voltage range of the country or region in which the equipment will be sold. For example, in the European Union, manufacturers may design equipment that operates at a nominal voltage at or near 207V.

Any excess voltage that is supplied to electrical equipment is usually dealt with within the equipment by stepping down, e.g. regulating, the voltage supplied to the equipment and dissipating the excess energy from the excess voltage as heat within the equipment. Electrical equipment can therefore be wasteful when supplied with a higher voltage than the nominal operating voltage of the equipment.

This wastage is a particular problem with electrical equipment designed for sale within the European Union, which is then operated within the UK. For example, within the European Union, as described above, manufacturers may design equipment that operates at a nominal voltage of 207V. In the UK, however, the normal supply voltage is 240V. Therefore, the equipment designed to operate at the nominal voltage of 207V could expect to normally receive an excess of 33V when operated in the UK. As mentioned above, this excess voltage would typically be wasted as heat within the equipment.

To overcome the problem of excess energy being consumed by electrical equipment, it is known to place a transformer between the incoming municipal electricity supply and the domestic or industrial installation having the electrical equipment. The transformer provides a reduced voltage to the equipment of the installation and, consequently, less energy is dissipated (and wasted) as heat by the equipment.

However, the voltage of municipal supplies is not always constant. For example, a sudden surge in the current drawn by an installation, or a sudden surge in the current drawn by other loads connected to the municipal supply, may significantly reduce the voltage of the municipal supply. In such situations, the voltage received by the transformer may drop and, as a result, the output voltage from the transformer will drop.

In some cases, the voltage provided to the installation by the transformer may fall outside the voltage range prescribed by a given country or region. As a result, some of the equipment of the installation, which is designed to operate within the prescribed range of the country or region, may not receive a high enough voltage to operate and, ultimately, may fail.

Caution must therefore be used when selecting an appropriate input/output voltage ratio for the transformer. If the voltage reduction is too great, then there is a risk that the voltage output from the transformer will drop to an unacceptably low level during fluctuations in the voltage of the municipal supply.

Accordingly, the transformers for known systems are selected to have a margin for error in their voltage reduction ratio and thus will, in normal use, provide a higher output voltage than that which is typically required by the equipment of the installation.

Known systems therefore do not provide the optimum voltage reduction and an excess voltage may still be supplied to the equipment of the installation. Thus in known systems excess energy may still be wasted to provide a margin for error.

Accordingly, the Applicants believe that there remains room for providing an improved way of reducing the electrical energy consumed by a domestic or industrial electrical installation.

WO 2007/017618 A1, over which the independent claims are characterised, describes an apparatus for selectively providing a reduced voltage.

### Statement of Invention

According to the present invention there is provided an apparatus for selectively providing a reduced voltage to a load from an electricity supply as claimed in claim 1 and a method for selectively providing a reduced voltage to a load from an electricity supply as claimed in claim 9.

In embodiments of the invention, the apparatus is arrangeable to operate in an energy saving mode, in which a voltage of a mains electricity supply is reduced using a transformer and the reduced voltage is provided to the load, and in a non-energy saving mode, in which the transformer is bypassed and the mains electricity supply is provided to the load.

In embodiments of the invention, the method comprises selectively using a transformer to provide a reduced voltage from a mains electricity supply and providing the reduced voltage to the load, or bypassing the transformer and providing the mains electricity supply to the load.

In the present invention, a voltage reduction means (which is preferably a transformer, as will be discussed further below) is used to provide a reduced voltage to a load from an input supply voltage. However, in the present invention, the load can be selectively provided with either the supply voltage or the reduced voltage. This can then allow, for example, and as will be discussed further below, the supply to the load to be reverted to the supply voltage in the event, e.g., that the reduced voltage provided by the voltage reduction means becomes too low. The present invention accordingly facilitates the provision of a reduced voltage much closer to the minimum required by the load (equipment) in question by the voltage reduction means, because rather than having to allow a "safety" margin (an error margin) as is the case in the prior art systems as discussed above, the present invention can revert instead to the supply voltage in the event, e.g., that the reduced voltage falls to too low a level.

Preferably, the electricity supply is a municipal mains supply, but it may also be, e.g., a supply from a generator (e.g. on a ship or in a building having its own generator). The load is preferably a domestic or industrial installation, e.g. a home, a hospital, an office, a supermarket or a swimming pool, or on a ship.

The electricity supply may either be a single phase or a multiple phase (e.g. a three phase) AC supply. Thus, the apparatus is preferably capable of receiving and outputting either a single phase AC electrical signal or a multiple phase (e.g. three phase) AC electrical signal to the load. Therefore, the supply voltage and reduced voltage may either be single phase or multiple phase (e.g. three phase) AC electrical signals.

As the electricity supply may either be a single phase or a multiple phase supply, the voltage reduction means is preferably arranged to reduce a voltage of either a single phase or a multiple phase (e.g. three phase) electrical signal. In the latter case, the voltage reduction means may, e.g., be arranged to reduce the voltage of each phase of the input supply signal individually to produce a corresponding phase of the (reduced voltage) output electrical signal.

The apparatus is preferably capable of receiving a single phase supply voltage or three phase supply voltage (line to neutral voltage) in the range 207V to 253V, i.e. the prescribed voltage range within the European Union. More preferably, the apparatus is configured to receive approximately 240V, i.e. the normal voltage supplied within the UK.

The voltage reduction means is preferably arranged to provide a reduced voltage in the range 210V to 230V, and more preferably in the range 215V to 225V. In a particularly preferred embodiment, the voltage reduction means is arranged to produce a reduced voltage of approximately 216V or approximately 220V.

The apparatus may typically receive an electricity supply having a voltage of approximately 240V, e.g. in the UK. Thus in a preferred embodiment, the input/output voltage ratio (i.e. the ratio of the input voltage to the output voltage, calculated by dividing the output voltage by the input voltage) of the voltage reduction means is preferably in the range 0.87 to 0.96, more preferably in the range 0.89 to 0.94, and most preferably is approximately 0.9 or approximately 0.92.

The voltage reduction means preferably comprises one or more transformers. The transformer(s) can have a single fixed input/output voltage ratio. However, in a particularly preferred embodiment, the or each transformer has a plurality of different discrete input/output voltage ratios, to which the transformer can selectively be set.

In embodiments where the transformer(s) has a plurality of different input/output voltage ratios, one of the input/output voltage ratios of the transformer may be selected manually from the plurality of input/output voltage ratios for that transformer in use.

However, in a preferred embodiment, the apparatus of the present invention is arranged to automatically select one of the different input/output voltage ratios of the transformer in accordance with one or more predefined criteria, and most preferably depending on the voltage of either the incoming supply voltage or the reduced voltage currently being produced.

For example, in the situation where the transformer can provide (at least) a first input/output voltage ratio and a second (different) input/output voltage ratio, the apparatus is preferably arranged to select the first input/output voltage ratio when the incoming supply voltage or the reduced voltage is below a first threshold value and is preferably arranged to select the second input/output voltage ratio when the incoming supply voltage or the reduced voltage is above the first threshold voltage value.

Generally, a lower input/output voltage ratio (i.e. a ratio having a lower numerical value) is used when a higher input voltage, ("supply voltage") or a higher output voltage ("reduced voltage") is detected so as to reduce the incoming supply voltage to a greater extent. In one illustrative example, an incoming supply voltage of 240V or more could mean that a ratio lower than 0.92 is selected while an incoming supply voltage of less than 240V could mean that a ratio greater than 0.92 is selected.

The above embodiments that select one of a plurality of different input/output voltage ratios are advantageous in that they allow the reduced voltage to remain consistently low (to thereby reduce the amount of energy consumed by the load) over a relatively larger range of incoming voltages, whilst also keeping that reduced voltage within an acceptable range of voltages:

For example, if the incoming supply voltage is high, a lower input/output voltage ratio (i.e. a ratio having a lower numerical value) can be used to keep the reduced voltage low, but if the incoming supply voltage falls, then the transformer can be switched to a higher input/output voltage ratio (i.e. a ratio having a higher numerical value) to ensure that the reduced voltage does not become too low.

It will also be appreciated that the transformer(s) can be provided with more than two different discrete input/output voltage ratios and that a corresponding number of different threshold values can be used for comparison to the incoming supply voltage or the reduced voltage. Using a greater number of different ratios is particularly advantageous in that it allows the reduced voltage to remain even closer to a desired (relatively low) voltage over an even greater range of incoming supply voltages.

In the above embodiments, where the transformer(s) has a plurality of different input/output voltage ratios that can be selected, each transformer may be provided with a plurality of tappings (connections), with each of the tappings providing a different output voltage for a given input voltage (i.e. each of the tappings provides a different input/output voltage ratio).

In preferred embodiments the voltage reduction means comprises one or more autotransformers. Autotransformers are typically more energy efficient than, e.g., continuously variable ratio transformers such as toroidal transformers. Autotransformers typically have a single winding, where the ends of the winding are connected to a primary voltage (e.g. a supply voltage), and a secondary voltage (e.g. a reduced voltage) is produced between one end of the winding and a tapping at an intermediate location between the two ends of the winding.

The Applicants have identified that multiple tappings at different locations can be provided on the winding of a transformer (which preferably is an autotransformer but may be a transformer having a plurality of windings), with each of the tappings being selectively connected to an output (and to the load) to provide a plurality of discrete (different) reduced voltages for a given supply voltage.

Although multiple tappings on the transformer output connection can be and are used in the broader embodiments of the invention, the Applicants have also identified that it may not always be desirable to have multiple tappings provided in this way.

For example, the Applicants have identified that such arrangements can result in voltages spikes in the reduced voltage or voltage supply dropouts when switching between different tappings (voltage reduction ratios). This is because the load is effectively being disconnected and then reconnected to the transformer.

The Applicants have instead identified that multiple neutral tappings can be provided, i.e. multiple connections to neutral towards one end of the winding of the transformer can be provided.

Thus, in preferred embodiments where the transformer(s) has a plurality of different input/output voltage ratios that can be selected, the or each transformer is provided with a plurality of tappings for neutral connections to the transformer. As discussed above, each of the tappings can provide a different output voltage for a given input voltage (i.e. each of the tappings provides a different input/output voltage ratio). This is preferably achieved by having a transformer winding or winding portion between adjacent neutral connections.

As will be discussed below, these arrangements allow switching between tappings (and thus input/output voltage ratios) to be done with a relatively smoother transition in the output voltage (reduced voltage). This can reduce or avoid the occurrence of voltage dropouts or voltage spikes delivered to the load when the input/output voltage ratio of the transformer is changed.

Indeed, it is believed that these arrangements of the present invention may be new and advantageous in their own right, and not just in the context of the above earlier aspects of the present invention.

In embodiments of the invention, the transformer comprises:
a live input connection for receiving a supply voltage from the live supply of an electricity supply;
an output connection for providing an output voltage to a load; and
a plurality of neutral connections for connecting the transformer to the neutral supply of the electricity supply.

In a preferred embodiment the transformer is part of an apparatus, and the apparatus further comprises a control means for selectively connecting at least one of the neutral connections to the neutral supply of the electricity supply.

Embodiments of the invention comprise:
selectively connecting at least one of the neutral connections to the neutral supply of the electricity supply.

In a preferred embodiment, the transformer is an autotransformer. Preferably, the live input connection, the output connection and the plurality of neutral connections are connected in series to each other via the winding of the autotransformer.

Preferably, a first neutral connection is connected through a first winding portion to a second neutral connection, which in turn is then connected through a second winding portion to the output connection, which in turn is then connected through a third winding portion to the input connection.

As will be appreciated, the transformer may comprise more than two neutral connections and thus may have more than three winding portions.

Preferably the apparatus is arranged to automatically selectively connect one or more of the neutral connections to the neutral supply of the electricity supply in accordance with one or more particular criteria, and preferably depending on the value of either the supply voltage or the reduced voltage currently being produced by the transformer.

Accordingly, the apparatus preferably comprises one or more voltage monitors for continuously or intermittently measuring the voltage of the supply voltage signal and/or of the reduced voltage signal.

In one embodiment, the apparatus alters (e.g. decreases) the input/output voltage ratio by disconnecting the first neutral connection from the neutral supply of the electricity supply and by connecting the second neutral connection to the neutral supply of the electricity supply.

However, the Applicants have identified that, by having multiple neutral connections (rather than multiple output connections (tappings)) then there is no need to have only one of the multiple connections connected to the transformer at any given time. Indeed, the Applicants have identified an advantage in successively or progressively connecting the neutral connections to the neutral supply.

Thus, in a preferred embodiment, the numerical value of the input/output voltage ratio is altered (decreased) by connecting the second neutral connection to the neutral supply whilst leaving the first neutral connection connected to the neutral supply. Similarly, the numerical value of the input/output voltage ratio is preferably altered (increased) by disconnecting the second neutral connection from the neutral supply, whilst leaving the first neutral connection connected to the neutral supply. This progressive connecting and/or disconnecting has the effect of altering (decreasing or increasing) the reduced voltage but provides a relatively smooth transition in that reduced voltage.

As will be appreciated, where the transformer comprises more than two neutral connections, those neutral connections can be successively or progressively connected to the neutral supply in order (i.e. second neutral connection, then third neutral connection, then fourth neutral connection... etc.) so as to alter (e.g. decrease) the numerical value of the input/output voltage ratio. Equally, the neutral connections can be successively or progressively disconnected from the neutral supply in order (...fourth, third, second etc.) in order to alter (e.g. increase) the numerical value of the input/output voltage ratio.

As will be appreciated by those skilled in the art, these embodiments of the invention can and preferably do include any one or more or all of the preferred and optional features of the invention, as appropriate.

In the present invention, the voltage reduction means may comprise exactly one transformer per phase. For example, in the situation where the electricity supply is a single phase supply, the voltage reduction means may comprise a single transformer. In the situation where the electricity supply is a three phase supply, the voltage reduction means may comprise three transformers.

Alternatively, the voltage reduction means may comprise a plurality of transformers per phase, e.g. two transformers per phase. For example, in the situation where the electricity supply is a single phase supply, the voltage reduction means may comprise two transformers. In the situation where the electricity supply is a three phase supply, the voltage reduction means may comprise six transformers.

The plurality of transformers for a given phase may be used in parallel to distribute the current for that phase, e.g. to avoid overloading the transformers assigned to that phase. For example, where there are two transformers per phase, a first transformer for a given phase may operate alone to reduce a voltage of the supply whilst a current of either the supply signal or the reduced voltage signal is below a predetermined value, e.g. 200A. When the current of either the supply or reduced voltage signal exceeds the predetermined value, a second transformer for the phase may be operated in parallel with the first transformer.

As will be appreciated by the skilled person, there may be more than two transformers per phase, with the transformers being progressively or successively brought online (i.e. made to operate to produce a reduced voltage in parallel with transformers that are already operating to produce a reduced voltage). For example, a 1200 amp rated apparatus may have three 400 amp rated transformers that can be added or withdrawn progressively or successively in accordance the current requirements of the load.

The control means can selectively provide the supply voltage or the reduced voltage to the load in any desired and suitable manner. Preferably the control means operates to connect either the supply voltage or the reduced voltage to the load, as appropriate.

It should be noted here that when the supply voltage is to be connected to the load, the supply voltage, e.g. in steady state operation, is not provided by the voltage reduction means, i.e. the voltage reduction means is bypassed or disconnected from the load.

Thus, there is preferably a switching arrangement, such as and preferably a load relay or relays or a contactor or contactors, to connect either the supply voltage or the reduced voltage output of the voltage reduction means to the load.

The switching arrangement may comprise, for example, a single relay for each phase for outputting either the supply voltage or the reduced voltage to the load. In a preferred embodiment the switching arrangement comprises two contactors for each phase: one contactor for outputting the supply voltage and one contactor for outputting the reduced voltage to the load. In one embodiment, the operation of the two contactors is linked by a mechanical interlock so as to prevent outputting both the supply voltage signal and the reduced voltage signal to the load at the same time. In an alternative embodiment, the operation of the two contactors is not linked by a mechanical interlock.

When the supply voltage is to be supplied to the load then, in steady state such operation, the voltage reduction means is preferably not operating to produce a reduced voltage. In these circumstances, the voltage reduction means is preferably isolated from both the electricity supply and the load.

However, in the present invention, for certain periods of time during operation when the supply voltage is to be supplied to the load, the voltage reduction means is still used to produce a reduced voltage (which then is not supplied to the load). In these time periods (as will be discussed further below), the voltage reduction means is still connected to the electricity supply, but not to the load.

Thus, in a particularly preferred embodiment, there is a switching arrangement, such as and preferably a switch or contactor, to connect, preferably selectively, the supply voltage to, or to disconnect the supply voltage from, the voltage reduction means, when the supply voltage is being supplied to the load.

These arrangements are preferably achieved by using suitable switching arrangements under the control of the control means.

In a preferred embodiment the apparatus may have additional outputs for connecting the supply voltage to other loads. In this embodiment, the additional outputs are not arranged so as to be capable of outputting a reduced voltage, i.e. the reduced voltage produced from the supply voltage.

The control means is preferably arranged to automatically switch the apparatus between a first mode of operation (i.e. a non-energy saving mode of operation), in which the supply voltage is provided to the load, and a second mode of operation(i.e. an energy saving mode of operation), in which the reduced voltage signal is connected to the load, based on one or more selected, preferably predetermined, criteria or conditions.

This automatic switching is preferably based on the value of one or more of: the voltage of the supply voltage signal; the voltage of the reduced voltage signal the current of the supply voltage signal; and the current of the reduced voltage signal.

Accordingly, the apparatus preferably comprises one or more voltage monitors for continuously or intermittently measuring the voltage of the supply voltage signal and/or of the reduced voltage signal.

In a particularly preferred such embodiment, the control means is arranged to automatically switch the apparatus from the second mode of operation to the first mode of operation when the voltage of the reduced voltage signal is not within a predetermined range, e.g. the range 207V to 253V, or the range 210V to 230V, or the range 215V to 225V, or is not approximately a predetermined value, e.g. approximately 216V or approximately 220V.

The apparatus similarly preferably comprises one or more current monitors for continuously or intermittently measuring the current of the supply voltage signal and/or of the reduced voltage signal. Preferably the one or more current monitors are current transformers.

In some embodiments, it may be inefficient to operate in the second mode of operation unless a minimum amount of current is being drawn by the load. Thus, in a preferred embodiment, the control means is arranged to automatically switch the apparatus from the first mode of operation to the second mode of operation when a current of the supply voltage signal or a current of the reduced voltage signal is greater than a predetermined amount, e.g. 4% of the rated current of the apparatus. The control means may also be arranged to automatically switch the apparatus from the second mode of operation to the first mode of operation when a current of the supply voltage signal or the reduced voltage electrical signal is less than a predetermined amount, e.g. 4% of the rated current of the apparatus, or greater than a predetermined amount, e.g. 100% of the rated current of the apparatus.

As mentioned above, the automatic switching of the apparatus between the first and second modes of operation is preferably based on the voltage or current of either the supply or reduced voltage signals. Put another way, the switching of modes is based on detecting a predetermined condition of either the supply or reduced voltage signal.

In a preferred embodiment, there is a predetermined time delay, e.g. 5 minutes, between detecting a predetermined condition for switching modes and the subsequent switching of modes. For example, there may be a delay of approximately 5 minutes between detecting a predetermined condition for switching to the second mode of operation and subsequently switching from the first mode of operation to the second mode of operation. In a preferred embodiment, the supply voltage is connected to the voltage reduction means at some point during this predetermined time delay (whilst still also not being provided to the load), e.g. using a switch or contactor. This allows the output of the voltage reduction means to settle before it will be connected to the load (at the end of the time delay).

In this arrangement, if the predetermined switching condition is not detected for the duration of the predetermined time delay (i.e. the condition is no longer met at the end of the time delay or is not present for the entire period of the time delay), the control means preferably does not switch the apparatus between modes. The predetermined time delay can therefore avoiding excessive switching of modes due to temporary fluctuations in either the supply or reduced voltage electrical signals.

There may also (or instead) be the same or a different predetermined time delay on detecting a condition for switching to the first mode of operation and subsequently switching from the second mode of operation to the first mode of operation. However, it is preferable that there is no delay in switching from the second mode of operation to the first mode of operation, so as to avoid failure of any electrical equipment connected to the apparatus, e.g. due to the voltage of the reduced voltage signal being outside a prescribed range.

In the present invention, there is a predetermined time delay, e.g. 5 minutes, after switching from the second mode of operation to the first mode of operation during which the supply voltage remains connected to the voltage reduction means, e.g. using a switch or contactor. This allows a more rapid return to the second mode of operation, i.e. without the need to wait for the output of the voltage reduction means to settle, should a condition for switching from the first mode of operation to the second mode of operation subsequently be detected again.

If a condition for switching from the first mode of operation to the second mode of operation is not detected during this predetermined time delay, the supply voltage signal is preferably disconnected from the voltage reduction means at the end of the second predetermined time delay, e.g. using a switch or contactor.

In a preferred embodiment, the switching from the first (non-energy saving) mode to the second (energy saving) mode is achieved in the following way:

Initially, the supply voltage is connected to the load and the voltage reduction means (e.g. transformer or autotransformer) is disconnected from the load, e.g. using a first switch or contactor between the voltage reduction means and the load. The voltage reduction means is also preferably disconnected from the supply voltage, e.g. using a second switch or contactor between the incoming supply voltage and the voltage reduction means.

At this point, a neutral connection for the voltage reduction means is also disconnected from the neutral supply of the electricity supply, e.g. using a third switch or contactor between the neutral connection for the voltage reduction means and the neutral supply of the incoming electricity supply.

The voltage reduction means is then connected to the incoming supply voltage of the incoming electricity supply (if not already connected to the incoming supply voltage) and the load, e.g. by using the first and second switches or contactors, such that the supply voltage is connected to the input side of the voltage reduction means and is also fed back to the output (load) side of the voltage reduction means.

At this point both the supply voltage and voltage reduction means are connected to the load, but the voltage reduction means has little or no effect on the output to the load as there is no neutral connection to the voltage reduction means.

The incoming supply voltage is then disconnected from the load, e.g. using a fourth switch or contactor, and, at substantially the same time as the incoming supply voltage is disconnected from the load or after a preset amount of time after the incoming supply voltage is disconnected from the load (e.g. 0 to 10 seconds, and more preferably 2 to 5 seconds), the neutral connection for the voltage reduction means is connected to the neutral supply, e.g. using the third switch or contactor.

At this point, the supply voltage is not connected to the load, and the voltage reduction means provides the reduced voltage to the load.

In the situation where one or more switches or contactors are used, an indication that each switch or contactor has been successfully switched or is in the correct state is preferably provided to the control means. If a switch is determined not to have been successfully switched or is determined to be in an incorrect switched state, then the control means preferably places the apparatus in the first (non-energy saving) mode.

In a similar manner to the above, the switching from the second (energy saving) mode to the first (non-energy saving) mode is preferably achieved in the following way:
Initially, the neutral connection for the voltage reduction means is connected to the neutral supply of the electricity supply and the voltage reduction means is connected to the incoming supply voltage and the load.

At this point, the supply voltage is not connected to the load, and the voltage reduction means provides the reduced voltage to the load.

The neutral connection for the voltage reduction means is then disconnected from the neutral supply, and, at substantially the same time as the voltage reduction means is disconnected from the neutral supply or after a preset amount of time after the voltage reduction means is disconnected from the neutral supply (e.g. 0 to 10 seconds, and more preferably 2 to 5 seconds), the incoming supply voltage is connected to the load.

At this point both the supply voltage and voltage reduction means are connected to the load, but, as described above, the voltage reduction means has little or no effect on the output to the load as there is no neutral connection to the voltage reduction means.

The voltage reduction means is then disconnected from the load and, preferably, is disconnected from the incoming supply voltage.

At this point, the incoming supply voltage is being provided to the load and the voltage reduction means is preferably isolated from both the supply voltage and the load.

The Applicants have identified that the above arrangements allow the voltage supplied to the load to be switched between the supply voltage and the reduced voltage and vice versa in a much smoother fashion, without, e.g., any spikes in the voltage that is being supplied to the load and without any momentary loss of power to the load during the switching. This may be particularly advantageous where the load is sensitive to sharp changes in supply voltage, e.g. loads such as sensitive electronic equipment (computers, medical equipment, etc.).

Indeed, it is believed that these arrangements of the present invention may be new and advantageous in their own right, and not just in the context of the above earlier aspects of the present invention. For example, the switching technique also allows smooth switching to occur when switching between an increased (rather than reduced) voltage and a supply voltage.

In embodiments of the invention, the apparatus comprises:
a voltage altering means for producing a particular voltage from the supply voltage, the voltage altering means being selectively connectable to a neutral supply of the electricity supply and selectively connectable to the load; and
a control means arranged to switch the voltage supplied to the load from the supply voltage to the particular voltage by:
   connecting the voltage altering means to the load while the neutral supply is disconnected from the voltage altering means and the supply voltage is connected to the load;
   disconnecting the supply voltage from the load; and
   connecting the neutral supply to the voltage altering means.

Embodiments of the invention comprise:
connecting a voltage altering means to the load while a neutral supply of an electricity supply is disconnected from the voltage altering means and a supply voltage of the electricity supply is connected to the load;
disconnecting the supply voltage from the load; and
connecting the neutral supply to the voltage altering means.

In a preferred embodiment, the steps of disconnecting the supply voltage from the load and connecting the neutral supply to the voltage altering means occur at substantially the same time.

In a preferred embodiment, the step of disconnecting the supply voltage from the load occurs between 0 and 10 seconds (and more preferably between 2 and 5 seconds) before the step of connecting the neutral supply to the voltage altering means.

As discussed above, the supply voltage is selectively connectable to the voltage altering means, e.g., so that the voltage altering means can be isolated from both the load and the supply voltage when the voltage altering means is not being used to provide the particular voltage to the load. In this embodiment, the supply voltage is connected to the voltage altering means prior to the neutral supply being connected to the voltage altering means so that the voltage altering means can produce the particular voltage from the supply voltage, and then provide that particular voltage to the load. The supply voltage is preferably connected to the voltage altering means prior to the supply voltage being disconnected from the load.

In embodiments of the invention, the apparatus comprises:
a voltage altering means for producing a particular voltage from the supply voltage, the voltage altering means being selectively connectable to a neutral supply of the electricity supply and selectively connectable to the load; and
a control means arranged to switch the voltage supplied to the load from the particular voltage to the supply voltage by:
   disconnecting the neutral supply from the voltage altering means while the voltage altering means is connected to the load;
   connecting the supply voltage to the load; and
   disconnecting the voltage altering means from the load.

Embodiments of the invention comprise:
disconnecting a neutral supply of an electricity supply from a voltage altering means while the voltage altering means is connected to the load;
connecting a supply voltage of the electricity supply to the load; and
disconnecting the voltage altering means from the load.

In a preferred embodiment, the steps of disconnecting the neutral supply from the voltage altering means and connecting the supply voltage to the load occur at substantially the same time.

In a preferred embodiment, the step of disconnecting the neutral supply from the voltage altering means occurs between 0 and 10 seconds (and more preferably between 2 and 5 seconds) before the step of connecting the supply voltage to the load.

As discussed above, the supply voltage is selectively connectable to the voltage altering means, e.g., so that the voltage altering means can be isolated from both the load and the supply voltage when the voltage altering means is not being used to provide the particular voltage to the load. In this embodiment, the supply voltage is disconnected from the voltage altering means after the neutral supply is disconnected from the voltage altering means so that the voltage altering means can be isolated both from the load and the supply voltage. The supply voltage is preferably disconnected from the voltage altering means after the supply voltage is connected to the load.

As will be appreciated, the above embodiments of the present invention can be combined to provide an apparatus and/or method that can switch the voltage supplied to the load from the particular voltage to the supply voltage, and that can also switch the voltage supplied to the load from the supply voltage to the particular voltage.

As described above, these embodiments of the invention allow for a smooth changeover to take place when connecting and disconnecting a voltage altering means (e.g. a voltage reduction means, transformer, autotransformer etc.) from a load, e.g. when switching an apparatus from a first non-energy saving mode to a second energy saving mode and vice versa as described above.

As will be appreciated by those skilled in the art, these embodiments of the invention can and preferably do include any one or more or all of the preferred and optional features of the invention, as appropriate.

In the present invention, the control means is preferably arranged to automatically place the apparatus in the first mode of operation when power is initially provided to the apparatus or the apparatus is reset. Furthermore, the control means is preferably arranged to keep the apparatus in the first mode of operation for a predetermined amount of time, e.g. at least 10 minutes, after power is initially provided to the apparatus or the apparatus is reset. This may help to avoid an inrush current from damaging the voltage reduction means or the load.

The apparatus preferably has a manual switch, e.g. a key switch, whereby the operator can manually select the first mode of operation (i.e. non-automatic operation) or the automatic mode of operation. Preferably, the manual switch (whilst the manual switch is in its "non-automatic" position) places the apparatus in the first mode of operation and prevents the control means from automatically switching the apparatus from the first mode of operation to the second mode of operation.

The apparatus preferably has a mains switch for disconnecting power from the apparatus, i.e. for disconnecting the input from the electricity supply.

The apparatus preferably has a reset switch for resetting the apparatus to its start-up state.

To avoid overheating, the apparatus preferably includes a forced ventilation unit, a fan or air conditioning unit arranged to provide a cooling flow to the voltage reduction means. The fan or air conditioning unit is preferably only operational when the temperature of the apparatus or voltage reduction means are above a predetermined value. Thus, the apparatus preferably comprises one or more temperature sensors (such as thermostats) for monitoring the temperature of the apparatus and/or voltage reduction means. The control means is preferably provided with the output from the temperature sensor(s), and can selectively operate the fan or air conditioning unit when necessary.

In a preferred embodiment, the control means is arranged to switch the apparatus from the second mode of operation to the first mode of operation when the temperature of the apparatus is above a predetermined value (e.g. when the ambient temperature of the enclosure of the apparatus is above approximately 30 °C) and/or when the temperature of the voltage reduction means is above a predetermined value (e.g. above approximately 110°C).

In a preferred embodiment, the forced ventilation unit, fan or air conditioning unit may be monitored and the control means may be arranged to switch the apparatus from the second mode of operation to the first mode of operation when the forced ventilation unit, fan or air conditioning unit is in a non-operating state or an abnormal operating state.

In a preferred embodiment, the heat generated by the apparatus or voltage reduction means is recovered and is used, e.g., to heat water for air conditioning etc.

In a preferred embodiment, the apparatus has means for monitoring (e.g. one or more sensors) and/or recording (e.g. one or more data storage devices) some or all of the operating functionality of the apparatus (e.g. incoming/outgoing voltages and currents, load requirements, operating mode, operating errors etc.).

The apparatus may further include a communication means for communicating a status of the apparatus to a device that is external to (and preferably remote from) the apparatus. The communication means may, e.g., be any means suitable for sending messages to a mobile telephone or computer via either a wired or wireless network. For example, status messages may be sent using SMS, e-mail, or any other suitable communications mechanism.

The methods in accordance with the present invention may be implemented at least partially using dedicated hardware, such as an ASIC (application specific integrated circuit).

The methods in accordance with the present invention may also or instead be implemented at least partially using programmable hardware, such as a programmable logic device, etc.

The methods in accordance with the present invention may also or instead be implemented at least partially using software, e.g. computer programs. Embodiments of the present invention comprise computer software specifically adapted to carry out the methods herein described when installed on data processing means, a computer program element comprising computer software code portions for performing the methods herein described when the program element is run on data processing means, and a computer program comprising code means adapted to perform all or some of the steps of a method or of the methods herein described when the program is run on a data processing system. The data processor may be a microprocessor system, a programmable FPGA (field programmable gate array), a programmable logic device, etc.

The invention also extends to a computer software carrier comprising such software which when used to operate a processor or microprocessor system comprising data processing means causes, in conjunction with said data processing means, said processor or system to carry out the steps of the methods of the present invention. Such a computer software carrier could be a physical storage medium such as a ROM chip, CD ROM or disk, or could be a signal such as an electronic signal over wires, an optical signal or a radio signal such as to a satellite or the like.

### Figures

Various embodiments of the present invention will now be described by way of example only and with reference to the accompanying drawings, in which:
Figures 1a and 1b show a circuit diagram for a single phase apparatus;
Figure 2 shows a control panel for the single phase apparatus;
Figures 3a and 3b show a circuit diagram for a three phase apparatus;
Figure 4 shows a control panel for the three phase apparatus;
Figures 5a and 5b show a, circuit diagram for a single phase apparatus having both energy saving and non-energy saving outputs; and
Figure 6 shows a control panel for the apparatus having both energy saving and non-energy saving outputs.

### Detailed Description

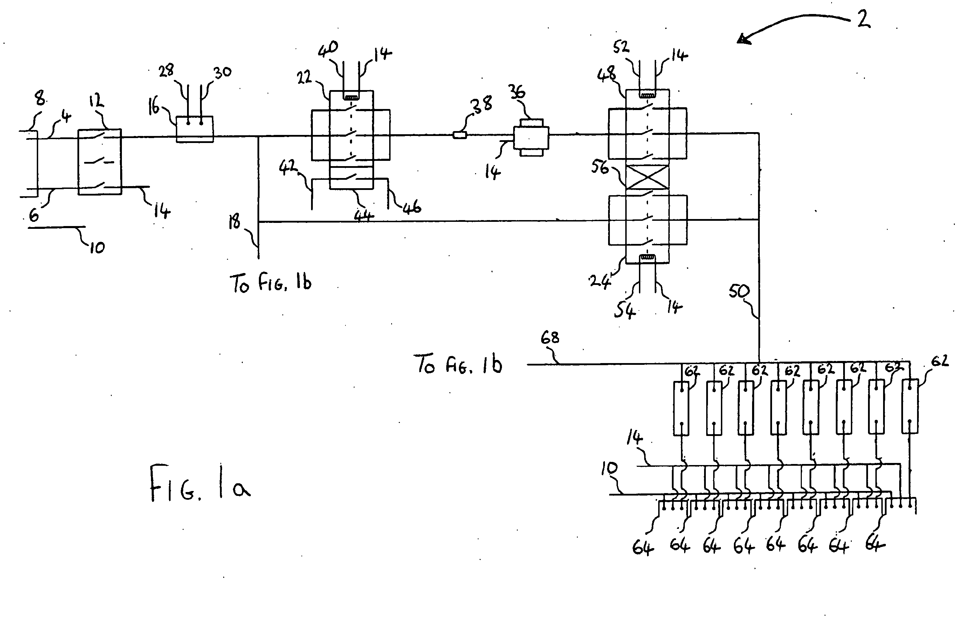

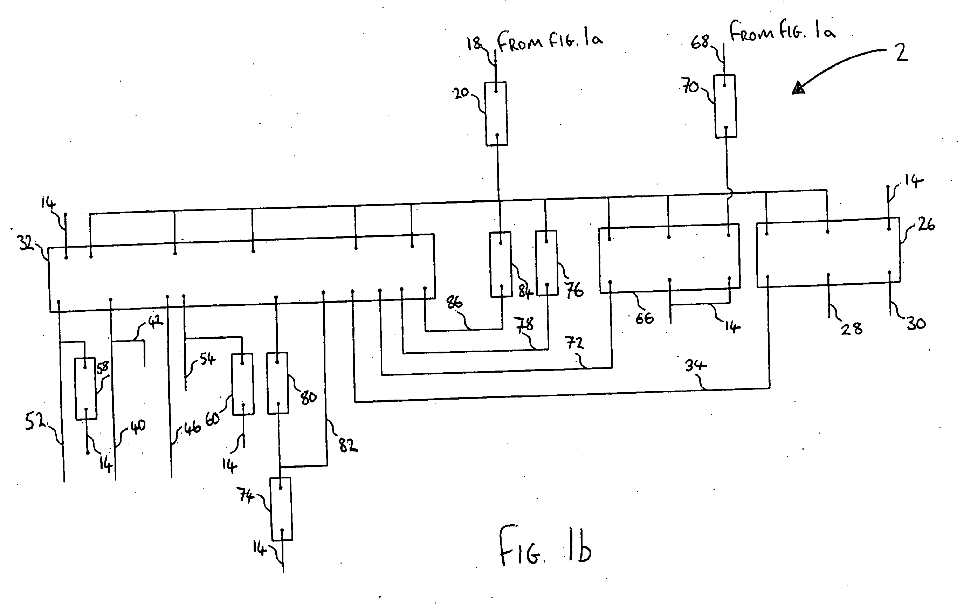

Figures 1 a and 1 b together show a circuit diagram for a single phase energy saving device 2 according to one embodiment of the present invention. The energy saving device 2 has a live input connection 4 for connecting the device 2 to the mains live supply and a neutral input connection 6 for connecting the device 2 to the mains neutral supply provided by an incoming mains supply terminal 8. The energy saving device 2 also has an earth connection 10 for connecting the device 2 to earth.

The live input connection 4 and the neutral input connection 6 are connected to a mains isolation switch 12. The mains isolation switch 12 is used to isolate the components of the device 2 from the mains supply. The mains isolation switch may be a residual current device (RCD).

When the isolation switch 12 is closed, the neutral input connection 6 provides a common neutral connection 14 to some of the components of the device. In addition, the live input connection 4 provides power to some of the components of the device through a current transformer 16, via a connection 18, and through a miniature circuit breaker (MCB) 20. The MCB 20 may be rated at 6A.

When the isolation switch 12 is closed, the live input connection 4 is also connected to a first transformer contactor 22 and a mains contactor 24 though the current transformer 16.

The current transformer 16 is used to measure the current supplied to the first transformer contactor 22 and/or the mains contactor 24 (which, substantially, is the current supplied to the load), and the current supplied to some of the components of the device via connection 18. The current transformer 16 is connected to a current monitor 26 via a positive current monitoring connection 28 and a negative current monitoring connection 30. The output from the current monitor 26 is made available to a control unit 32, e.g. a programmable logic controller (PLC), which functions as part of the control means in this embodiment, via a connection 34.

The first transformer contactor 22 is connected to a voltage reduction means in the form of a voltage step-down auto transformer 36 via a transformer fuse 38. The first transformer contactor 22 can either connect the live input connection 4 to the transformer 36 or disconnect the live input connection 4 from the transformer 36. The operation of the first transformer contactor 22 is controlled via a connection 40 connected to the control unit 32, together with the common neutral 14.

The control signal provided via connection 40 is also provided via a connection 42 to the input side of an N/O auxiliary contactor 44 that forms part of the first transformer contactor 22. The output from the N/O auxiliary contactor 44 is connected to the control unit 32 via a connection 46. Thus, when the first transformer contactor 22 is closed, such that the live input connection 4 is connected to the transformer 36, the N/O auxiliary contactor 44 is also closed, such that the control signal provided to the N/O auxiliary contactor 44 is returned to the control unit 32. By this means, the control unit 32 can monitor the operational state of the first transformer contactor 22, and hence can determine whether or not the live input connection 4 is connected to the transformer 36.

When the first transformer contactor 22 is closed, the transformer 36 receives the mains supply input voltage signal provided by the live input connection 4 to produce an output signal of lower (reduced) voltage.

In a preferred embodiment, the transformer 36 can selectively provide one of a plurality of different discrete reduced output voltages for a given input voltage. In one such preferred embodiment, the transformer 36 has a plurality of neutral tappings (connections) at different locations towards one end its winding that can be selectively connected to the common neutral 14 using switches that are under the control of the control unit 32. In this preferred embodiment, the control unit 32 automatically selectively connects one or more of the neutral tappings to the common neutral 14 to give a desired transformer input/output voltage ratio in the manner previously described above. An appropriate input/output voltage ratio (i.e. a ratio that keeps the reduced voltage output within an acceptable range) is preferably automatically selected by the control unit 32 in use.

The reduced voltage output from the transformer 36 is connected to a second transformer contactor 48. The second transformer contactor 48 can either connect the output from the transformer 36 (i.e. a reduced voltage signal) to a live output connection 50 (which is connected to the load), or disconnect the output from the transformer 36 from the live output connection 50. The operation of the second transformer contactor 48 is controlled via a connection 52 connected to the control unit 32, together with the common neutral 14.

The mains contactor 24 can similarly either connect the live input connection 4 (i.e. the supply voltage signal) to the live output connection 50 or disconnect the live input connection 4 from the live output connection 50. The operation of the mains contactor 24 is controlled via a connection 54 connected to the control unit 32, together with the common neutral 14.

In this embodiment, the second transformer contactor 48 and mains contactor 24 are connected via a mechanical interlock 56, which ensures that only one of those contactors can connect a signal (i.e. either the reduced voltage signal or the supply voltage signal) to the live output connection 50 at any moment in time.

In an alternative embodiment, the mechanical interlock 56 is not present, and (as will be discussed in more detail below) both the output from the transformer 36 and the live input connection 4 can be connected to the load at the same time.

The first transformer contactor 22, second transformer contactor 48, and mains contactor 24 are rated according to the load and, in this embodiment, are rated at 30A.

In a non energy saving mode (i.e. a first mode), the first transformer contactor 22 disconnects the live input connection 4 from the transformer 36, the second transformer contactor 48 disconnects the output from the transformer 36 from the live output connection 50, and the mains contactor 24 connects the live input connection 4 to the live output connection 50 (to the load), i.e. the transformer 36 is isolated and bypassed. Thus, the full mains voltage is provided to the live output connection 50 and to the load. A mains lamp 60 is used to indicate that the device 2 is operating in the non-energy saving mode.

In an energy saving mode (i.e. a second mode), the first transformer contactor 22 connects the live input connection 4 to the transformer 36, the second transformer contactor 48 connects the reduced voltage output from the transformer 36 to the live output connection 50 (to the load), and the mains contactor 24 disconnects the live input connection 4 from the live output connection 50. Thus, a reduced voltage from the transformer 36 is provided to the live output connection 50 and to the load. An energy save lamp 58 is used to indicate that the device 2 is operating in the energy saving mode.

The voltage of the live output connection 50 is provided to various loads external to the device 2 via MCBs 62 and sockets 64. The common neutral connection 14 and earth connection 10 are also provided to the various loads via the sockets 64. The sockets 64 may be MT32 connectors.

The voltage of the live output connection 50 is monitored by a voltage monitor 66 via a connection 68, and through an MCB 70. The MCB may be rated at 6A. The output from the voltage monitor 66 is made available to the control unit 32 via a connection 72.

The operation of the device 2 is controlled by the control unit 32. The control unit 32 outputs control signals to the first transformer contactor 22 via the connection 40, the second transformer contactor 48 via the connection 52, and the mains contactor 24 via the connection 54. The control unit 32 also receives control signals from the voltage monitor 66 via the connection 72 and the current monitor 26 via the connection 34.

The control unit 32 is programmed to automatically place the device 2 in either the energy or non-energy saving modes based on the current monitor 26 control signal or the voltage monitor 66 control signal.

The device 2, and in particular the transformer 36, is cooled by a fan 74 (or, e.g: in devices which supply relatively large amounts of power, an air conditioning unit). A temperature sensor 76 is installed within the device 2 (e.g. on or near the transformer 36 or placed within the enclosure of the device 2) to monitor the internal temperature of the device 2. The output from the temperature sensor 76 is made available to the control unit 32 via a connection 78. When the temperature of the device 2 exceeds a predetermined value the control unit operates the fan 74 via an MCB 80. Thus, the fan 74 only operates when required.

In a preferred embodiment, when the temperature of the device 2 exceeds a predetermined value (e.g. when the ambient temperature of the enclosure of the device is above 30°C or when the temperature of the transformer is above 110°C) the control unit automatically places the device 2 in the non-energy saving mode so as to avoid overheating the transformer 36 and/or other components of the device 2.

The voltage supplied to the fan 74 may be monitored by the control unit 32 via a connection 82. Should the voltage supplied to the fan 74 be determined by the control unit 32 to be abnormal (e.g. indicating that the fan 74 is not operating correctly) then the control unit 32 will place the device 2 in the non-energy saving mode. The transformer 36 is thereby automatically disconnected from the live input connection 4 when a potential absence of a cooling flow from the fan 74 is detected, so as to avoid overheating the transformer 36 and/or other components of the device 2.

The control unit 32 also receives control signals from a key switch 84 via a connection 86. The key switch 84 can be used by an operator of the device 2 to place the device 2 in one of a number of operating states. For example, the device 2 may be manually placed in the automatic mode or in a mode in which the non-energy saving mode is always activated. The position of the key switch 84 is made available to the control unit 32 via the connection 86.

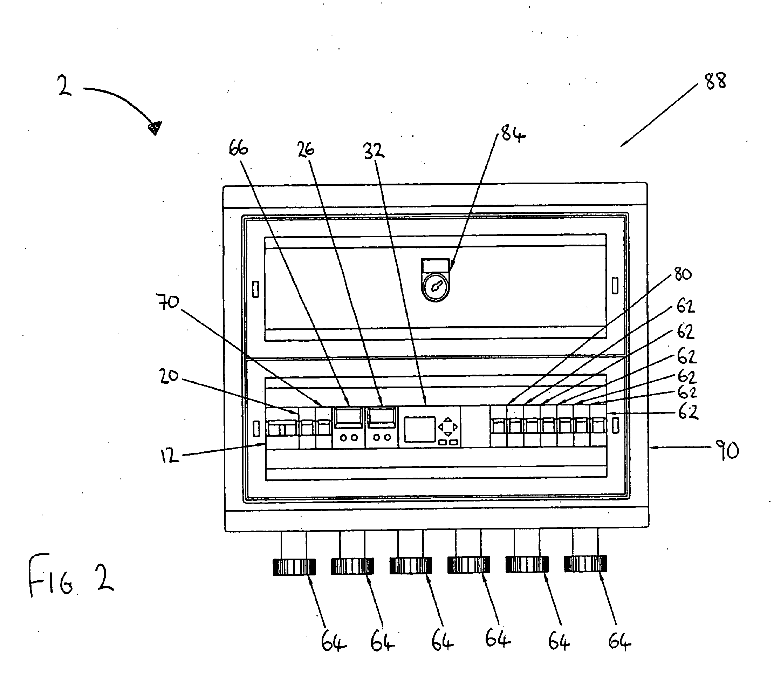

Figure 2 shows a control panel 88 for one embodiment of the single phase device 2. The relative positions of the mains isolation switch 12, the voltage monitor 66, the current monitor 26, the control unit 32, the key switch 84, the various MCBs 20, 62, 70, 80 and the various output connectors 64 are shown. The voltage monitor 66 and current monitor 26 have display screens for respectively displaying the value of the monitored voltage and current, and also have buttons for selecting display parameters such as units. The control unit 32 has a display screen for displaying the status of the device 2, and also has buttons for altering the various parameters used to control the device 2. The control panel 88 is preferably mounted to an IP65 rated enclosure 90.

Operation of the energy saving device 2 will now be described with reference to Figures 1 a and 1 b.

To provide power to the device 2, the mains isolation switch 12 is closed to connect the components of the device 2 to the mains supply. For a predetermined amount of time after closing the switch 12, e.g. at least 10 minutes, the control unit 32 holds the first transformer contactor 22 and the second transformer contactor 48 in the open position such that the transformer 36 is not connected to the live input connection 4 and the output from the transformer 36 is not connected to the live output connection 50. For the predetermined amount of time, the live input connection 4 is connected to the live output connection 50 by the mains contactor 24. This may avoid any inrush current from damaging the transformer 36 or any of the various loads that may be connected to the device 2. After the predetermined amount of time, the device 2 is then able to operate in the energy saving mode.

The energy saving mode is activated after the current monitor 26 detects that a current of at least a predetermined amount, e.g. 4% of the rated current of the device 2, is being drawn. The predetermined amount of current is preferably selected based on whether or not it is efficient to operate the energy saving mode whilst that current is being drawn by the load.

After the current monitor 26 detects that a current of at least the predetermined amount is being drawn, but before initiating the energy saving mode, the first transformer contactor 22 is closed so that the transformer 36 is connected to the live input connection 4. There is then a predetermined time delay, e.g. 5 minutes, before the output from the transformer 36 is connected to the live output connection 50 by the second transformer contactor 48 and the live input connection 4 is disconnected from the live output connection 50 by the mains contactor 24, i.e. to activate the energy saving mode. This predetermined time delay allows the output from the transformer 36 to settle.

If the current monitor 26 detects that less than the predetermined amount of current is being drawn during the predetermined time delay, then the energy saving mode is not activated and the transformer 36 is disconnected from the live input connection 4. If the current monitor 26 detects that at least the predetermined amount of current is drawn for the duration of the predetermined time delay, then the energy saving mode is activated.

In a preferred embodiment, when the energy saving mode is activated the live input connection 4 is disconnected from the live output connection 50 by the mains contactor 24 and, at the same time, the output from the transformer 36 is connected to the live output connection 50 instead by the second transformer contactor 48. Thus, in the energy saving mode, a reduced voltage is delivered to the various loads via the live output connection 50.

In an alternative preferred embodiment, when the energy saving mode is activated, the second transformer contactor 48 connects the output from the transformer 36 to the live output connection 50 whilst the common neutral 14 is disconnected from the transformer 36 and whilst the live input connection 4 is connected to the live output connection 50 by the mains contactor 24 (i.e. in this embodiment the mains contactor 24 and second transformer contactor 48 are not mechanically interlocked). In this embodiment, the live input connection 4 is then disconnected from the live output connection 50 by the mains contactor 24 and then, after a predetermined period of time, the common neutral 14 is connected to the transformer 36 so that a reduced voltage can be produced by the transformer 36 and so that the reduced voltage can then be delivered to the various loads via the live output connection 50. As discussed above, this method of switching allows for a relatively smoother transfer from supply voltage to reduced voltage to occur, and thus reduces or avoids voltage spikes or power dropouts. This is particularly advantageous when the load comprises electrically sensitive equipment, such as a computers or hospital equipment.

The energy saving mode is deactivated when the current monitor 26 detects that less than the predetermined amount of current, e.g. 4% of the rated current of the device, is being drawn or when the voltage monitor 66 detects that the live output connection 50 voltage has fallen outside a predetermined range, e.g. 207V to 253V.

When the energy saving mode is deactivated the live input connection 4 is instantly re-connected to the live output connection 50 by the mains contactor 24 and the output from the transformer 36 is, at the same time, instantly disconnected from the live output connection 50 by the second transformer contactor 48. Thus, in the non energy saving mode, the full mains voltage is supplied to the various loads via the live output connection 50.

Immediately after the energy saving mode has been deactivated, the first transformer contactor 22 remains closed so that the transformer 36 remains connected to the live input connection 4. There is then a predetermined time delay, e.g. 5 minutes, before the output from the transformer 36 is disconnected from the live input connection 4 by the first transformer contactor 22. This time delay allows a more rapid reconnection of the output of the transformer 36 to the output live connection 50, i.e. without the need for the output from the transformer 36 to settle, should the current monitor 26 again detect that the predetermined amount of current is being drawn.

When the predetermined time delay has passed, if the current monitor 26 detects that the various loads are still drawing less than the predetermined amount of current, then the first transformer contactor 22 is opened so that the transformer 36 is disconnected from the live input connection 4.

In an alternative preferred embodiment, when the energy saving mode is deactivated, the common neutral 14 is firstly disconnected from the transformer 36, then, after a predetermined period of time, the live input connection 4 is connected to the live output connection 50 by the mains contactor 24 whilst the common neutral 14 is disconnected from the transformer 36 and whilst the output from the transformer 36 is connected to the live output connection 50 by the second transformer contactor 48 (i.e. in this embodiment the mains contactor 24 and second transformer contactor 48 are not mechanically interlocked). Thus, the full mains voltage is supplied to the various loads via the live output connection 50. The second transformer contactor 48 then disconnects the output from the transformer 36 from the live output connection 50. The first transformer contactor 22 also disconnects the transformer from the live input 4 connection so as to fully isolate and bypass the transformer 36. As discussed above, this method of switching allows for a relatively smoother transfer from reduced voltage to supply voltage to occur.

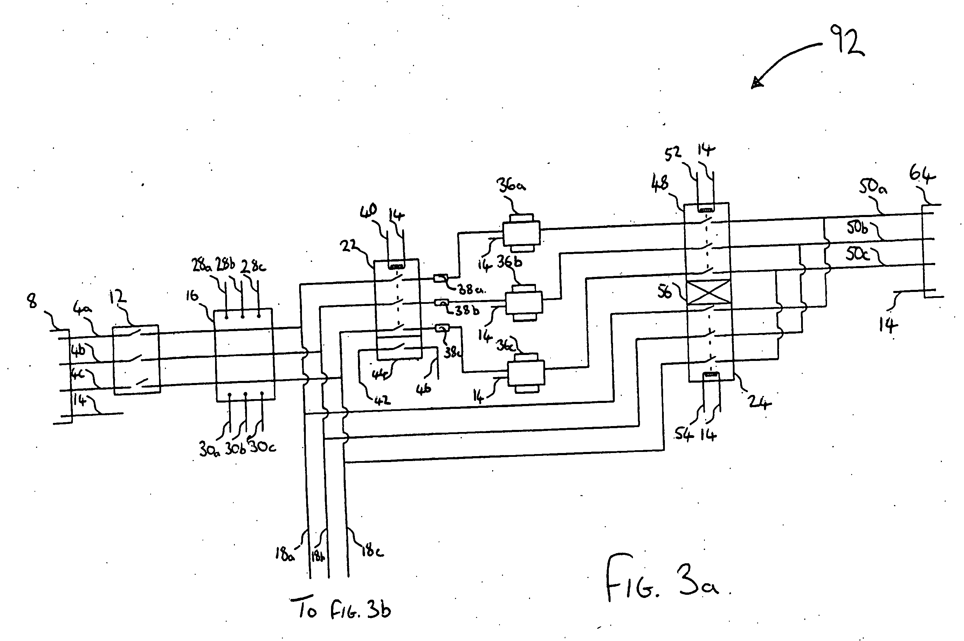

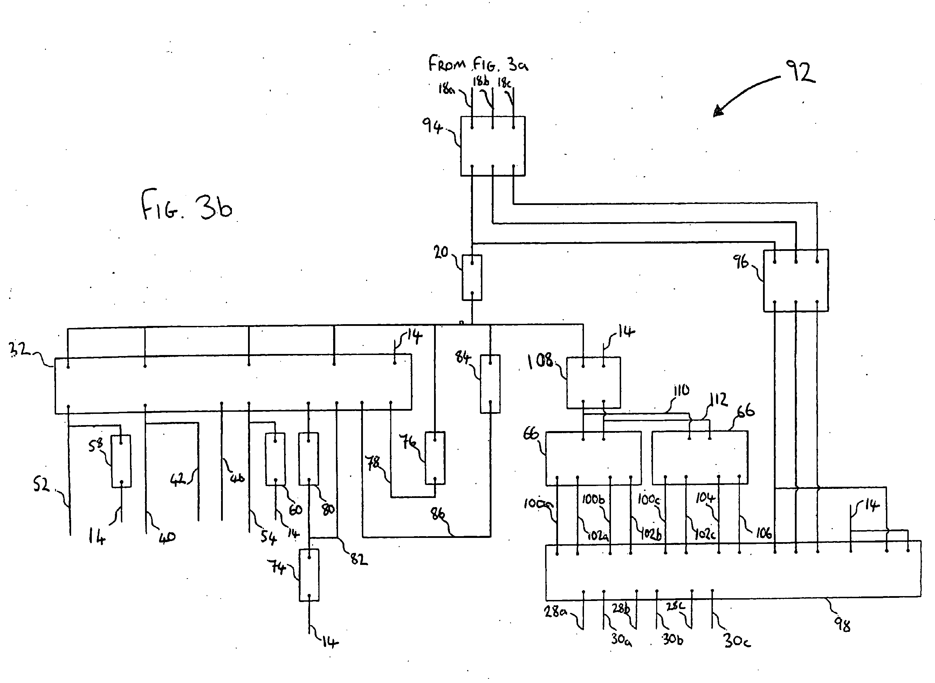

Figures 3a and 3b together show a circuit diagram for a three phase energy saving device 92 according to one embodiment of the present invention. The construction and operation of the three phase device 92 is substantially the same as the single phase device 2 described above. The reference numerals used to indicate the features of Figures 3a and 3b are the same as those used to indicate the corresponding features in Figures 1 a and 1 b.

The device of Figures 3a and 3b comprises three live input connections 4a, 4b, 4c, three fuses 38a, 38b, 38c, three auto transformers 36a, 36b, 36c, and three live output connections 50a, 50b, 50c, i.e. one of each for each of the three phases. A three-phase current transformer 16, a three-phase first transformer contactor 22, a three-phase second transformer contactor 48, a three-phase mains contactor 24 and three-phase MCBs 94, 96 are used. In this embodiment, MCB 94 is rated at 20A and the MCB 96 is rated at 4A.

The device uses a three phase monitor 98, such as a Rayleigh MultiFunction Power monitor, to monitor the currents and voltages of the three phases of the input supply signal. The three phase monitor 98 outputs a voltage or current for each phase, which is proportional to the current of that phase, using positive connections 100a, 100b, 100c and negative connections 102a, 102b, 102c. The three phase monitor 98 also outputs a voltage or current that is proportional to the voltage of the phase having the lowest voltage using a positive connection 104 and a negative connection 106. These voltages are provided to the control unit 32 from voltages monitors 66 via appropriate connections (not shown).

In this embodiment, power to the voltage monitors 66 is provide by an AC to DC transformer (or rectifier) 108. The AC to DC transformer (rectifier) 108 supplies a first voltage, e.g. 24V, via a connection 110 and a second voltage, e.g. 0V, via a connection 112 to the voltage monitors 66.

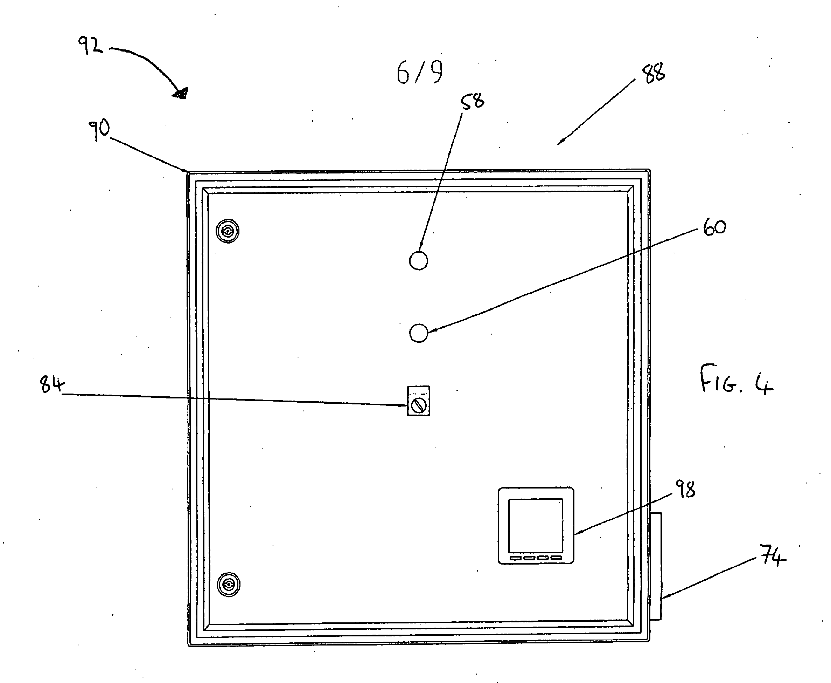

Figure 4 shows one embodiment of a control panel 88 for the three phase device 92. The relative positions of the three phase monitor 98, the key switch 84, the energy save on lamp 58, the mains lamp 60 and the fan 74 are shown. The control panel 88 is preferably mounted to an IP65 rated enclosure 90.

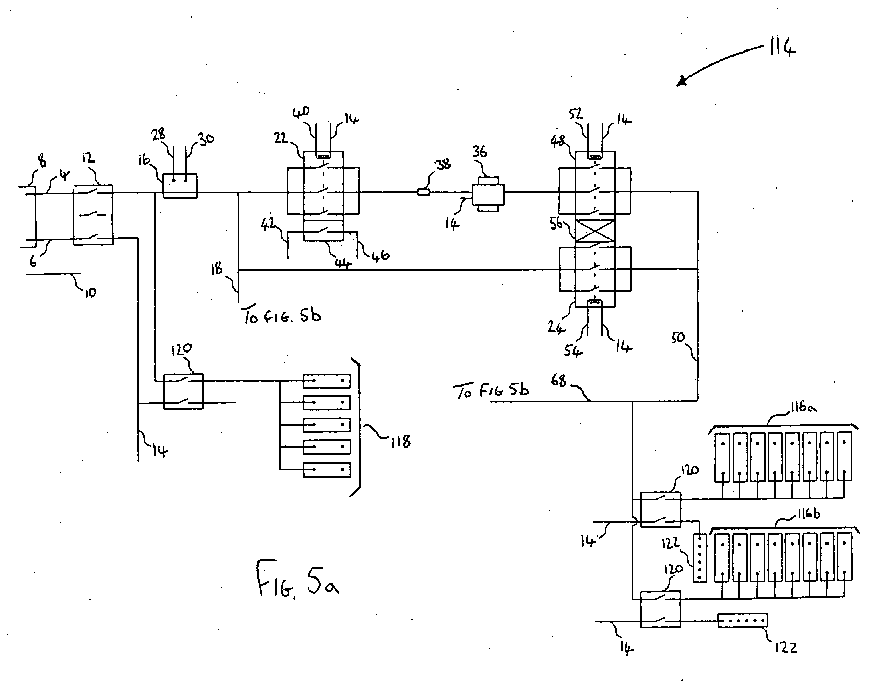

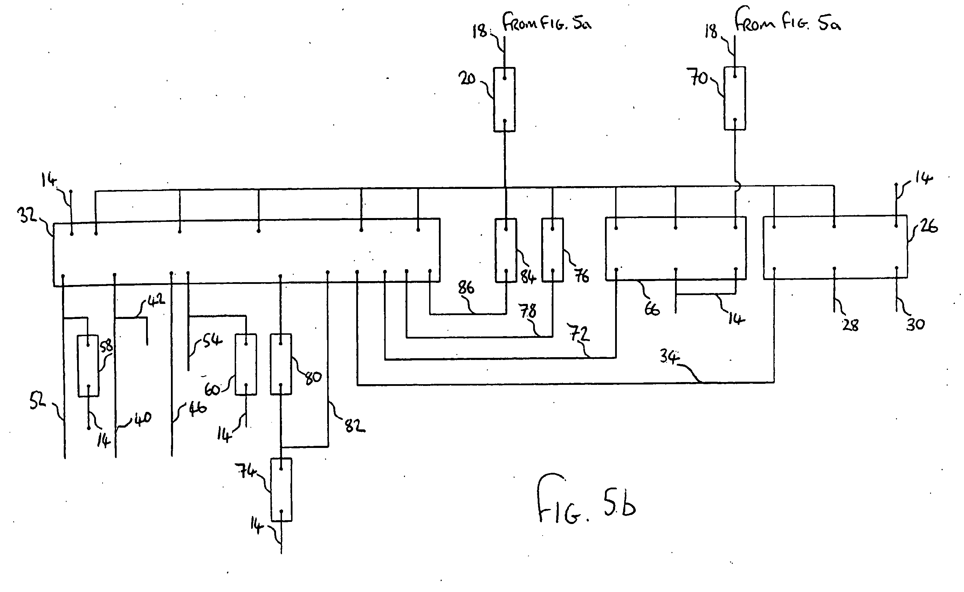

Figures 5a and 5b together show a circuit diagram for a single phase energy saving device 114 having both energy saving and non energy saving outputs according to one embodiment of the present invention. The construction and operation of the dual output device 114 is substantially the same as the single phase device 2 described above. The reference numerals used to indicated the features of Figures 5a and 5b are the same as those used to indicate the corresponding features in Figures 1a and 1b.

The device of Figures 5a and 5b comprises two sets of energy saving output MCBs 116a, 116b, and also a set of non energy saving output MCBs 118 connected directly to the live input connection 4. The current drawn by any devices attached to the second set of output MCBs 118 is not monitored and the voltage provided to the second set of output MCBs 118 is not reduced during the energy saving mode. The second set of output MCBs may be used, for example, for supplying power to more sensitive or critical loads.

Each of the sets of output MCBs (two sets of energy saving output MCBs 116a, 116b, and one set of non energy saving output MCBs 118) has an isolation switch 120, e.g. a residual current device (RCD), to isolate the various sets of output MCBs from the energy saving device 114. In this embodiment, the common neutral connection 14 is provided to the various external loads via busbars 122.

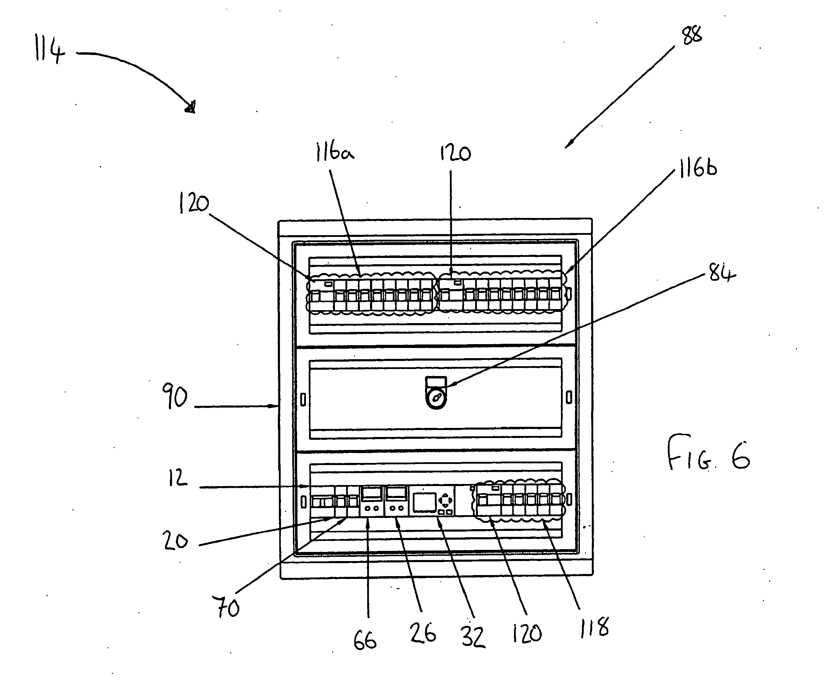

Figure 6 shows a control panel 88 for one embodiment of the dual output device 114. The layout is similar to the single phase device control panel 88 shown in Figure 2. However, Figure 6 shows the position of the additional RCDs 120, the two sets of energy saving output MCBs 116a, 116b, and the set of non energy saving output MCBs 118. The control panel 88 is preferably mounted to an IP65 rated enclosure 90.

Accordingly, there is described herein an apparatus and method in which either a supply voltage or a reduced voltage can be selectively provided to a load. The present invention therefore allows the voltage supplied to the load to be reverted to the supply voltage in the event, e.g., that the reduced voltage becomes too low or reduced voltage operation becomes inefficient. The present invention therefore allows the provision of a reduced voltage much closer to the minimum required by the load, rather than having to provide a "safety" margin.

Although the present invention has been described with reference to preferred embodiments, it will be understood by those skilled in the art that many changes in form and detail may be made without departing from the scope of the invention, which is set forth in the accompanying claims.

## Claims

1. An apparatus (2) for selectively providing a reduced voltage to a load from an electricity supply, the apparatus comprising:
an input (8) for receiving a supply voltage from the electricity supply;
a voltage reduction means (36) for producing a reduced voltage from the supply voltage; and
a control means (32) for selectively connecting either the supply voltage or the reduced voltage to the load; **characterised in that**:
the control means (32) is arranged to provide:
a predetermined time delay between connecting the supply voltage to the voltage reduction means (36) and subsequently connecting the reduced voltage to the load; and/or
a predetermined time delay between disconnecting the reduced voltage from the load and subsequently disconnecting the supply voltage from the voltage reduction means (36).

2. The apparatus of claim 1, wherein the electricity supply is a municipal mains supply, and the load is a domestic or industrial installation.

3. The apparatus of claim 1 or 2, wherein the input/output voltage ratio of the voltage reduction means (36) is in the range 0.87 to 0.96.

4. The apparatus of claim 1, 2 or 3, wherein the voltage reduction means (36) comprises one or more auto transformers.

5. The apparatus of any one of the preceding claims, wherein the voltage reduction means (36) comprises:
a input connection for receiving the supply voltage;
an output connection for providing the reduced voltage; and
a plurality of neutral connections for connecting the voltage reduction means (36) to a neutral supply (14) of the electricity supply.

6. The apparatus of any one of the preceding claims, wherein the control means (32) is arranged to selectively connect the supply voltage to, or disconnect the supply voltage from, the voltage reduction means (36).

7. The apparatus of any one of the preceding claims, wherein the control means (32) is arranged to connect either the supply voltage or the reduced voltage to the load in dependence on the value of one or more of:
the voltage of the supply voltage signal;
the voltage of the reduced voltage signal;
the current of the supply voltage signal; and
the current of the reduced voltage signal.

8. The apparatus of any one of the preceding claims, wherein the control means (32) is arranged to switch the voltage supplied to the load from the supply voltage to the reduced voltage by:
connecting the voltage reduction means (36) to the load while a neutral supply (14) from the electricity supply is disconnected from the voltage reduction means (36) and while the supply voltage is connected to the load;
disconnecting the supply voltage from the load; and
connecting the neutral supply (14) to the voltage reduction means (36);
and/or
wherein the control means (32) is arranged to switch the voltage supplied to the load from the reduced voltage to the supply voltage by:
disconnecting a neutral supply (14) from the electricity supply from the voltage reduction means (36) while the voltage reduction means (36) is connected to the load;
connecting the supply voltage to the load; and
disconnecting the voltage reduction means (36) from the load.

9. A method for selectively providing a reduced voltage to a load from an electricity supply, the method comprising:
selectively reducing a supply voltage from the electricity supply to produce a reduced voltage; and
selectively connecting either the supply voltage or the reduced voltage to the load; **characterised by**:
commencing the reduction of the supply voltage to produce the reduced voltage, and, after a predetermined time delay, connecting the reduced voltage to the load; and/or
disconnecting the reduced voltage from the load, and, after a predetermined time delay, ceasing the reduction of the supply voltage to produce the reduced voltage.

10. The method of claim 9, wherein the electricity supply is a municipal mains supply, and the load is a domestic or industrial installation.

11. The method of claim 9 or 10, wherein the supply voltage is reduced by an input/output voltage ratio in the range 0.87 to 0.96 to produce the reduced voltage.

12. The method of claim 9, 10 or 11, wherein the reduced voltage is produced from the supply voltage using a voltage reduction means (36), the voltage reduction means (36) comprising:
a input connection for receiving the supply voltage;
an output connection for providing the reduced voltage; and
a plurality of neutral connections for connecting the voltage reduction means to a neutral supply (14) of the electricity supply; the method comprising:
selectively connecting at least one of the neutral connections to the neutral supply (14) of the electricity supply.

13. The method of any one of claims 9 to 12, comprising selectively connecting either the supply voltage or the reduced voltage to the load in dependence on the value of one or more of:
the voltage of the supply voltage signal;
the voltage of the reduced voltage signal;
the current of the supply voltage signal; and
the current of the reduced voltage signal.

14. The method of any one of claims 9 to 13 wherein the reduced voltage is produced from the supply voltage using a voltage reduction means (36), the method comprising:
switching the voltage supplied to the load from the supply voltage to the reduced voltage by:
connecting the voltage reduction means (36) to the load while a neutral supply (14) from the electricity supply is disconnected from the voltage reduction means (36) and while the supply voltage is connected to the load;
disconnecting the supply voltage from the load; and
connecting the neutral supply (14) to the voltage reduction means (36);
and/or
switching the voltage supplied to the load from the reduced voltage to the supply voltage by:
disconnecting a neutral supply (14) from the electricity supply from the voltage reduction means (36) while the voltage reduction means (36) is connected to the load;
connecting the supply voltage to the load; and
disconnecting the voltage reduction means (36) from the load.

15. A computer program comprising computer executable instructions, said instructions being arranged to be executable by a control system (32) of an apparatus for selectively providing a reduced voltage to a load, said apparatus having:
an input (8) for receiving a supply voltage from the electricity supply;
a voltage reduction means (36) for producing a reduced voltage from the supply voltage; and
a control system (32) for selectively connecting either the supply voltage or the reduced voltage to the load;
said computer executable instructions being arranged to cause said control system (32) to carry out the method of any one of claims 9 to 14 when executed by the control system (32).

## Patentansprüche

1. Vorrichtung (2) zum selektiven Bereitstellen einer reduzierten Spannung für eine Last aus einer Stromversorgung, wobei die Vorrichtung Folgendes umfasst:
einen Eingang (8) zum Aufnehmen einer Versorgungsspannung aus der Stromversorgung;
ein Spannungsreduzierungsmittel (36) zum Erzeugen einer reduzierten Spannung aus der Versorgungsspannung; und
ein Steuerungsmittel (32) zum selektiven Anlegen entweder der Versorgungsspannung oder der reduzierten Spannung an die Last; **dadurch gekennzeichnet, dass**:
das Steuerungsmittel (32) dafür ausgelegt ist, Folgendes zu liefern:
eine vorgegebene Zeitverzögerung zwischen dem Anlegen der Versorgungsspannung an das Spannungsreduzierungsmittel (36) und anschließendes Anlegen der reduzierten Spannung an die Last; und/oder
eine vorgegebene Zeitverzögerung zwischen dem Abschalten der reduzierten Spannung von der Last und dem anschließenden Abschalten der Versorgungsspannung am Spannungsreduzierungsmittel (36).

2. Vorrichtung nach Anspruch 1, wobei die Stromversorgung eine städtische Stromversorgung ist und die Last eine Haus- oder Industrieanlage ist.

3. Vorrichtung nach Anspruch 1 oder 2, wobei das Verhältnis Eingangs-/Ausgangsspannung des Spannungsreduzierungsmittels (36) im Bereich von 0,87 bis 0,96 liegt.

4. Vorrichtung nach Anspruch 1, 2 oder 3, wobei das Spannungsreduzierungsmittel (36) einen oder mehrere Autotransformatoren umfasst.

5. Vorrichtung nach einem der vorherigen Ansprüche, wobei das Spannungsreduzierungsmittel (36) Folgendes umfasst:
einen Eingangsanschluss zum Aufnehmen der Versorgungsspannung;
einen Ausgangsanschluss zum Bereitstellen der reduzierten Spannung; und
mehrere neutrale Anschlüsse zum Verbinden des Spannungsreduzierungsmittels (36) mit einem Nullleiter (14) der Stromversorgung.

6. Vorrichtung nach einem der vorherigen Ansprüche, wobei das Steuerungsmittel (32) dafür ausgelegt ist, die Stromversorgungsspannung an das Spannungsreduzierungsmittel (36) selektiv anzulegen oder von demselben zu trennen.

7. Vorrichtung nach einem der vorherigen Ansprüche, wobei das Steuerungsmittel (32) dafür ausgelegt ist, entweder die Versorgungsspannung oder die reduzierte Spannung an die Last anzulegen, je nach dem Wert von einem oder mehreren der folgenden Varianten:
Spannung des Signals der Versorgungsspannung;
Spannung des Signals der reduzierten Spannung;
Strom des Signals der Versorgungsspannung; und
Strom des Signals der reduzierten Spannung.

8. Vorrichtung nach einem der vorherigen Ansprüche, wobei das Steuerungsmittel (32) dafür ausgelegt ist, die Spannung, die an die Last angelegt ist, von der Versorgungsspannung auf die reduzierte Spannung durch Folgendes umzuschalten:
Verbinden des Spannungsreduzierungsmittels (36) mit der Last, während ein Nullleiter (14) der Stromversorgung vom Spannungsreduzierungsmittel (36) abgeklemmt ist und während die versorgungsspannung an die Last angelegt ist;
Abtrennen der Versorgungsspannung von der Last;
und
Verbinden des Nullleiters (14) mit dem Spannungsreduzierungsmittel (36);
und/oder
wobei das Steuerungsmittel (32) dafür ausgelegt ist, die Spannung, die an die Last angelegt ist,
von der reduzierten Spannung auf die Versorgungsspannung durch Folgendes umzuschalten:
Abklemmen eines Nullleiters (14) der Stromversorgung vom Spannungsreduzierungsmittel (36), während das Spannungsreduzierungsmittel (36) an die Last angelegt ist;
Anlegen der Versorgungsspannung an die Last; und
Abklemmen des Spannungsreduzierungsmittels (36) von der Last.

9. Verfahren zum selektiven Bereitstellen einer reduzierten Spannung für eine Last aus einer Stromversorgung, wobei das Verfahren Folgendes umfasst:
selektives Reduzieren einer Versorgungsspannung aus der Stromversorgung, um eine reduzierte Spannung zu erzeugen; und
selektives Anlegen entweder der Versorgungsspannung oder der reduzierten Spannung an die Last; **gekennzeichnet durch**:
Beginnen der Reduzierung der Versorgungsspannung, um die reduzierte Spannung zu erzeugen; und nach einer vorgegebenen Zeitverzögerung, Anlegen der reduzierten Spannung an die Last; und/oder
Abklemmen der reduzierten Spannung von der Last, und nach einer vorgegebenen Zeitverzögerung, Beenden der Verringerung der Versorgungsspannung, um die reduzierte Spannung zu erzeugen.

10. Verfahren nach Anspruch 9, wobei die Stromversorgung eine städtische Stromversorgung ist und die Last eine Haus- oder Industrieanlage ist.

11. Verfahren nach Anspruch 9 oder 10, wobei die Versorgungsspannung um ein Verhältnis von Eingangs-/Ausgangsspannung im Bereich von 0,87 bis 0,96 reduziert ist, um die reduzierte Spannung zu erzeugen.

12. Verfahren nach Anspruch 9, 10 oder 11, wobei die reduzierte Spannung aus der Versorgungsspannung unter Verwendung eines Spannungsreduzierungsmittels (36) erzeugt ist, wobei das Spannungsreduzierungsmittel (36) Folgendes umfasst:
einen Eingangsanschluss zum Aufnehmen der Versorgungsspannung;
einen Ausgangsanschluss zum Bereitstellen der reduzierten Spannung; und
mehrere neutrale Anschlüsse zum Verbinden des Spannungsreduzierungsmittels mit einem Nullleiter (14) der Stromversorgung, wobei das Verfahren Folgendes umfasst:
selektives Verbinden von mindestens einem der neutralen Anschlüsse mit dem Nullleiter (14) der Stromversorgung.

13. Verfahren nach einem der Ansprüche 9 bis 12, das das selektive Verbinden, entweder der Versorgungsspannung oder der reduzierten Spannung mit der Last, umfasst, je nach dem Wert von einem oder mehreren von Folgenden:
Spannung des Signals der Versorgungsspannung; Spannung des Signals der reduzierten Spannung; Strom des Signals der Versorgungsspannung; und Strom des Signals der reduzierten Spannung.

14. Verfahren nach einem der Ansprüche 9 bis 13, wobei die reduzierte Spannung aus der Versorgungsspannung unter Verwendung eines Spannungsreduzierungsmittels (36) erzeugt ist, wobei das Verfahren Folgendes umfasst:
Umschalten der Spannung, die an die Last angelegt ist, von der Versorgungsspannung auf die reduzierte Spannung durch:
Verbinden des Spannungsreduzierungsmittels (36) mit der Last, während ein Nullleiter (14) der Stromversorgung vom Spannungsreduzierungsmittel (36) abgeklemmt ist und während die Versorgungsspannung an die Last angelegt ist;
Abtrennen der Versorgungsspannung von der Last;
und
Verbinden des Nullleiters (14) mit dem Spannungsreduzierungsmittel (36);
und/oder
Umschalten der Spannung, die an die Last angelegt ist, von der reduzierten Spannung auf die Versorgungsspannung durch:
Abklemmen eines Nullleiters (14) der Stromversorgung vom Spannungsreduzierungsmittel (36), während das Spannungsreduzierungsmittel (36) an die Last angelegt ist;
Anlegen der Versorgungsspannung an die Last; und
Abklemmen des Spannungsreduzierungsmittels (36) von der Last.

15. Computerprogramm, das Anweisungen umfasst, die vom Computer ausgeführt werden können, wobei die Anweisungen so gestaltet sind, dass sie von einem Steuerungssystem (32) einer Vorrichtung zum selektiven Bereitstellen einer reduzierten Spannung für eine Last ausgeführt werden können, wobei die Vorrichtung Folgendes hat:
einen Eingang (8) zum Aufnehmen einer Versorgungsspannung aus der Stromversorgung;
ein Spannungsreduzierungsmittel (36) zum Erzeugen einer reduzierten Spannung aus der Versorgungsspannung; und
ein Steuerungssystem (32) zum selektiven Anlegen entweder der Versorgungsspannung oder der reduzierten Spannung an die Last;
wobei die vom Computer ausführbaren Anweisungen so gestaltet sind, dass sie das Steuerungssystem (32) veranlassen, das Verfahren nach einem der Ansprüche 9 bis 14 auszuführen, wenn sie vom Steuerungssystem (32) ausgeführt werden.

## Revendications

1. Appareil (2) permettant de fournir sélectivement une tension réduite à une charge depuis une alimentation électrique, lequel appareil comprend:
- une entrée (8) pour recevoir une tension d'alimentation depuis l'alimentation électrique ;
- un moyen de réduction de tension (36) afin de générer une tension réduite à partir de la tension d'alimentation ; et
- un moyen de commande (32) pour connecter sélectivement la tension d'alimentation ou la tension réduite à la charge ;
**caractérisé en ce que** :
- le moyen de commande (32) est conçu de manière à générer :
- un retard temporel prédéterminé entre la connexion de la tension d'alimentation au moyen de réduction de tension (36) puis la connexion de la tension réduite à la charge ; et/ou
- un retard temporel prédéterminé entre la déconnexion de la tension réduite par rapport à la charge puis la déconnexion de la tension d'alimentation par rapport au moyen de réduction de tension (36).

2. Appareil selon la revendication 1, dans lequel l'alimentation électrique est une alimentation par réseau municipal, tandis que la charge est une installation domestique ou industrielle.

3. Appareil selon les revendications 1 ou 2, dans lequel le rapport de tension d'entrée/sortie du moyen de réduction de tension (36) se situe dans une plage de 0,87 à 0,96.

4. Appareil selon les revendications 1, 2 ou 3, dans lequel le moyen de réduction de tension (36) comprend un ou plusieurs transformateurs automatiques.

5. Appareil selon l'une quelconque des revendications précédentes, dans lequel le moyen de réduction de tension (36) comprend :
- une connexion d'entrée afin de recevoir la tension d'alimentation ;
- une connexion de sortie afin de fournir la tension réduite ; et
- plusieurs connexions neutres afin de connecter le moyen de réduction de tension (36) à une alimentation neutre (14) de l'alimentation électrique.

6. Appareil selon l'une quelconque des revendications précédentes, dans lequel le moyen de commande (32) est conçu pour connecter la tension d'alimentation ou déconnecter la tension d'alimentation de façon sélective par rapport au moyen de réduction de tension (36).

7. Appareil selon l'une quelconque des revendications précédentes, dans lequel le moyen de commande (32) est conçu pour connecter la tension d'alimentation ou la tension réduite à a charge en fonction de la valeur d'un ou de plusieurs des paramètres suivants :
- la tension du signal de tension d'alimentation ;
- la tension du signal de tension réduite ;
- le courant du signal de tension d'alimentation ; et
- le courant du signal de tension réduite.

8. Appareil selon l'une quelconque des revendications précédentes, dans lequel le moyen de commande (32) est conçu pour faire passer la tension envoyée à la charge de la tension d'alimentation à la tension réduite, ceci en ;
- connectant le moyen de réduction de tension (36) à la charge pendant qu'une alimentation neutre (14) de l'alimentation électrique est déconnectée du moyen de réduction de tension (36) et pendant que la tension d'alimentation est connectée à la charge ;
- déconnectant la tension d'alimentation de la charge ; et
- connectant l'alimentation neutre (14) au moyen de réduction de tension (36) ;
et/ou le moyen de commande (32) est conçu pour faire passer la tension envoyée à la charge de la tension réduite à la tension d'alimentation, ceci en :
- déconnectant une alimentation neutre (14) de l'alimentation électrique du moyen de réduction de tension (36) pendant que le moyen de réduction de tension (36) est connecté à la charge ;
- connectant la tension d'alimentation à la charge ; et
- déconnectant le moyen de réduction de tension (36) de la charge.

9. Procédé pour fournir sélectivement une tension réduite à une charge depuis une alimentation électrique, lequel procédé consiste à :
- réduire sélectivement une tension d'alimentation depuis une alimentation électrique afin de générer une tension réduite ; et
- connecter sélectivement la tension d'alimentation ou la tension réduite à une charge ; **caractérisé en ce que** :
- on commence par réduire la tension d'alimentation afin de produire la tension réduite et, après un retard temporel prédéterminé, on connecte la tension réduite à la charge ; et/ou
- on déconnecte la tension réduite de la charge et, après un retard temporel prédéterminé, on cesse la réduction de la tension d'alimentation afin de générer la charge réduite.

10. Procédé selon la revendication 9, dans lequel l'alimentation électrique est une alimentation par réseau municipal, tandis que la charge est une installation domestique ou industrielle.

11. Procédé selon la revendication 9 ou la revendication 10, dans lequel la tension d'alimentation est réduite selon un rapport de tension d'entrée sortie se situant dans une plage de 0,87 à 0,96 de manière à générer la tension réduite.

12. Procédé selon les revendications 9, 10 ou 11, dans lequel la tension réduite est générée à partir de la tension d'alimentation en utilisant un moyen de réduction de tension (36), lequel moyen de réduction de tension (36) comprend :
- une connexion d'entrée afin de recevoir la tension d'alimentation ;
Une connexion de sortie afin de fournir la tension réduite ; et
- plusieurs connexions neutres afin de connecter le moyen de réduction de tension à une alimentation neutre (14) de l'alimentation électrique ;
lequel procédé consiste à coupler sélectivement au moins une des connexions neutres à l'alimentation neutre (14) de l'alimentation électrique.

13. Procédé selon l'une quelconque des revendications 9 à 12, consistant à connecter sélectivement la tension d'alimentation ou la tension réduite à la charge en fonction de la valeur d'un ou de plusieurs des paramètres suivants :
- la tension du signal de tension d'alimentation ;
- la tension du signal de tension réduite ;
- le courant du signal de tension d'alimentation ; et
- le courant du signal de tension réduite.

14. Procédé selon l'une quelconque des revendications 9 à 13, dans lequel la tension réduite est générée à partir de la tension d'alimentation en utilisant un moyen de réduction de tension (36), lequel procédé consiste à :
- faire passer la tension envoyée à la charge de la tension d'alimentation à la tension réduite, ceci en ;
- connectant le moyen de réduction de tension (36) à la charge pendant qu'une alimentation neutre (14) de l'alimentation électrique est déconnectée du moyen de réduction de tension (36) et pendant que la tension d'alimentation est connectée à la charge ;
- déconnectant la tension d'alimentation de la charge ; et
- connectant l'alimentation neutre (14) au moyen de réduction de tension (36) ;
et/ou
- faire passer la tension envoyée à la charge de la tension réduite à la tension d'alimentation, ceci en ;
- déconnectant une alimentation neutre (14) de l'alimentation électrique du moyen de réduction de tension (36) pendant que le moyen de réduction de tension (36) est connecté à la charge ;
- connectant la tension d'alimentation à la charge ; et
- déconnectant le moyen de réduction de tension (36) de la charge.

15. Programme informatique contenant des instructions exécutables par ordinateur, lesquelles instructions sont conçues pour être exécutées par un système de commande (32) d'un appareil pour fournir sélectivement une tension réduite à une charge, et lequel appareil comprend :
- une entrée (8) pour recevoir une tension d'alimentation depuis l'alimentation électrique ;
- un moyen de réduction de tension (36) afin de générer une tension réduite à partir de la tension d'alimentation ; et
- un système de commande (32) pour connecter sélectivement la tension d'alimentation ou la tension réduite à la charge ;
- lesquelles instructions exécutables par ordinateur sont conçues de sorte que ledit système de commande (32) réalise le procédé selon l'une quelconque des revendications 9 à 14 lors de l'exécution par le système de commande (32).
